# DEMANDE DE BREVET EUROPEEN

(11) **EP 4 446 235 A1**
(43) Date de publication de la demande: **16.10.2024**
(21) Numéro de dépôt: 24169587.3
(22) Date de dépôt: 11.04.2024
(51) Int. Cl.: B64D 37/30

(54) **AÉRONEF COMPORTANT UNE CANALISATION D'APPORT DE DIHYDROGÈNE LOGÉE DANS UN COULOIR DÉLIMITÉ ENTRE DEUX LONGERONS D'UNE AILE**

(30) Priorité: 14.04.2023 FR 2303751
(71) Demandeur: AIRBUS OPERATIONS, 31060 Toulouse Cedex 9 (FR)
(72) Inventeur: BELLEVILLE, Mathieu, 31060 TOULOUSE (FR)
(74) Mandataire: Cabinet Le Guen Maillet

(57) **Abrégé**

L'invention concerne un aéronef comportant une aile (102), un moteur fonctionnant au dihydrogène, une canalisation d'apport (106) pour le dihydrogène, où chaque aile (102) présente un longeron avant (102a), un premier longeron arrière (102b) s'étendant à l'arrière du longeron avant (102a) et un deuxième longeron arrière (102c) s'étendant à l'arrière du premier longeron arrière (102b), où les deux longerons arrière (102b-c) définissent entre eux, un couloir (110), et où chaque canalisation d'apport (106) s'étend vers l'arrière depuis le moteur associé puis à l'intérieur du couloir (110) de l'aile (102) supportant le moteur associé. Avec un tel arrangement, la canalisation d'apport est protégée d'éventuels débris venant du moteur.

## Description

### DOMAINE TECHNIQUE

La présente invention se rapporte au domaine des aéronefs et, en particulier, des aéronefs dont la source d'énergie est du dihydrogène liquide ou gazeux pour alimenter une chambre de combustion d'un moteur. La présente invention concerne ainsi un aéronef comportant une canalisation d'apport de dihydrogène logée dans un couloir délimité entre deux longerons d'une aile de l'aéronef.

### ÉTAT DE LA TECHNIQUE ANTÉRIEURE

Il est connu d'utiliser le dihydrogène comme source d'énergie dans certains véhicules. Le dihydrogène pourrait donc être utilisé comme source d'énergie dans un aéronef. Le dihydrogène est stocké dans un réservoir et une canalisation d'apport assure le transport du dihydrogène du réservoir vers la chambre de combustion d'un moteur.

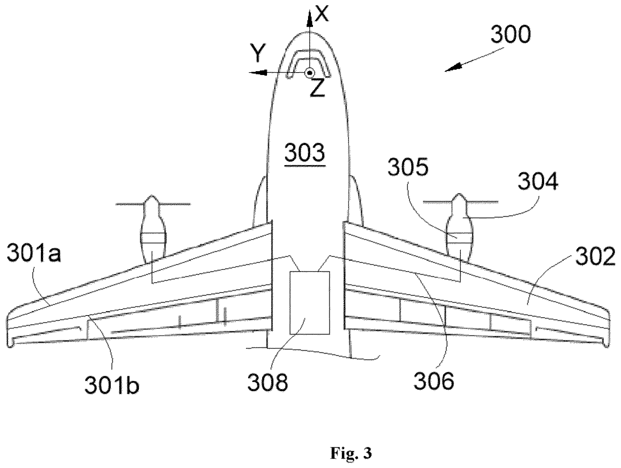

La Fig. 3 montre un aéronef 300 de l'état de la technique qui comporte une aile 302 de chaque côté d'un fuselage 303 et sous chaque aile 302 est fixé au moins un moteur 304 fonctionnant au dihydrogène. L'aéronef 300 comporte un réservoir de dihydrogène 308 et une canalisation d'apport 306 qui apporte du dihydrogène à chaque moteur 304 depuis le réservoir 308.

Chaque aile 302 présente un longeron avant 301a et un longeron arrière 301b, ainsi qu'une paroi d'intrados et une paroi d'extrados fixées au-dessous et au-dessus des longerons 301a-b. Au longeron arrière 301b, sont également fixés de manière articulée, les éléments mobiles de l'aile 302 tels que les ailerons ainsi que les actionneurs de ces éléments mobiles.

Le moteur 304 comporte un compresseur et une turbine 305, en amont et en aval de la chambre de combustion du moteur 304. En cas d'avaries sur le moteur 304, des morceaux, en particulier des morceaux des pales du compresseur et/ou de la turbine 305 peuvent se séparer de l'arbre tournant sur lequel, ils sont fixés, au risque d'entrer en collision avec une canalisation d'apport 306.

Il est donc souhaitable de prévoir un arrangement qui assure que la canalisation d'apport est protégée des éventuels débris provenant du compresseur et/ou de la turbine.

Le document FR3127203 décrit un aéronef comportant un système de propulsion, au moins une canalisation de transport de dihydrogène d'un réservoir de dihydrogène au système de propulsion et un canal d'enfouissement de cette canalisation de transport. La canalisation de transport est agencée entre un longeron avant et un longeron arrière de l'aile, c'est-à-dire dans un caisson de l'aile. Cette canalisation de transport n'est toutefois pas protégée des éventuels débris provenant du système de propulsion.

### EXPOSÉ DE L'INVENTION

Un objet de la présente invention est de proposer un aéronef comportant une canalisation d'apport de dihydrogène logée dans un couloir délimité entre deux longerons d'une aile de l'aéronef.

À cet effet, est proposé un aéronef comportant :
- au moins une aile,
- un réservoir de dihydrogène,
- pour chaque aile, au moins un moteur fonctionnant au dihydrogène, fixé à l'aile et comportant un rotor, et
- pour chaque moteur, une canalisation d'apport fluidiquement connectée entre le moteur et le réservoir de dihydrogène,

où chaque aile présente un longeron avant s'étendant au niveau d'une partie avant de l'aile et un premier longeron arrière s'étendant à l'arrière du longeron avant et un deuxième longeron arrière s'étendant à l'arrière du premier longeron arrière, où les deux longerons arrière définissent entre eux, un couloir, et
où chaque canalisation d'apport s'étend vers l'arrière depuis le moteur associé puis à l'intérieur du couloir de l'aile supportant le moteur associé.

Avec un tel arrangement, la canalisation d'apport est protégée d'éventuels débris venant du moteur. En particulier, comme les premier et deuxième longerons arrière sont agencés en dehors d'une trajectoire de potentiels débris venant du moteur, la canalisation d'apport, étant agencée dans le couloir entre lesdits premier et deuxième longerons arrière, est également agencée en dehors de la trajectoire de potentiels débris venant du moteur.

Avantageusement, chaque aile présente au niveau d'une peau d'intrados, au moins une fenêtre basse qui ouvre le couloir à travers ladite peau d'intrados, et au niveau d'une peau d'extrados, au moins une fenêtre haute qui ouvre le couloir à travers ladite peau d'extrados. Avantageusement, la fenêtre haute est du côté d'une extrémité proximale de l'aile et la fenêtre basse est du côté d'une extrémité distale de l'aile.

Avantageusement, la fenêtre haute est du côté d'une extrémité distale de l'aile et la fenêtre basse est du côté d'une extrémité proximale de l'aile.

Avantageusement, l'aéronef comporte pour chaque couloir, un ventilateur arrangé dans ledit couloir.

Avantageusement, l'aéronef comporte entre la canalisation d'apport et le deuxième longeron arrière, une paroi de protection constituée d'un matériau thermiquement isolant. Avantageusement, chacun des longerons avant et des premier et deuxième longerons arrière s'étend globalement sur toute la longueur de l'aile.

Avantageusement, la distance entre le premier longeron arrière et le deuxième longeron arrière, entre un bord d'attaque et un bord de fuite de l'aile, est inférieure à la distance entre le premier longeron arrière et le longeron avant.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de dessus d'un aéronef selon l'invention,
Fig. 2 est une vue en coupe d'une aile de l'aéronef de la Fig. 1 selon la ligne II-II, et
Fig. 3 est une vue de dessus d'un aéronef de l'état de la technique.

### EXPOSÉ DÉTAILLÉ DE MODES DE RÉALISATION

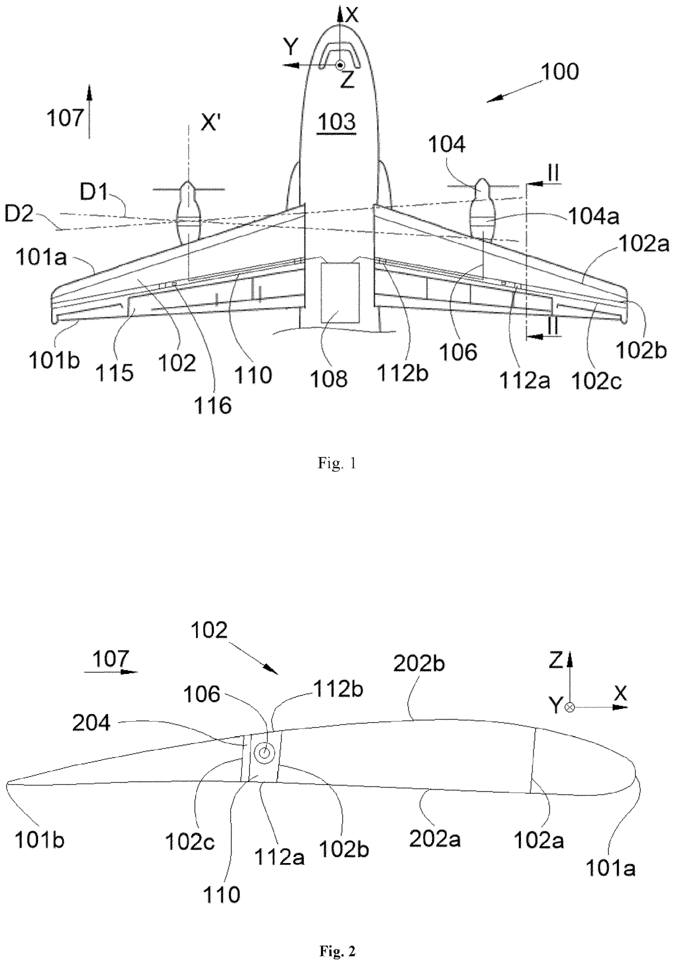

La Fig. 1 montre un aéronef 100 qui présente un fuselage 103 de part et d'autre duquel est fixée une aile 102 qui présente classiquement à l'avant un bord d'attaque 101a et à l'arrière un bord de fuite 101b. Sous chaque aile 102 est fixé au moins un moteur 104. Dans le mode de réalisation de l'invention présenté à la Fig. 1, chaque moteur 104 est fixé au niveau du bord d'attaque 101a de l'aile 102.

Par convention, on appelle X la direction longitudinale de l'aéronef 100, Y la direction transversale de l'aéronef 100 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 100 lors du fonctionnement des moteurs 104, cette direction étant représentée schématiquement par la flèche 107.

Dans le mode de réalisation de l'invention présenté ici, chaque moteur 104 prend la forme d'un turboréacteur avec une chambre de combustion alimentée en dihydrogène comme carburant. Le moteur 104 comprend également au moins un rotor 104a mobile en rotation autour d'un axe de rotation X' sensiblement parallèle à la direction longitudinale X. Par "sensiblement parallèle", on entend que l'axe de rotation X' est parallèle à la direction longitudinale X à quelques degrés près, ces degrés correspondant aux tolérances usuelles de fabrication et d'installation du rotor. Par exemple, de façon non limitative, l'axe du rotor 104 peut s'étendre selon un axe ayant une inclinaison dans le plan XY comprise entre -5° et +5° par rapport à la direction longitudinale X, et plus précisément comprise entre -1° et +1° par rapport à la direction longitudinale X, et selon un axe ayant une inclinaison dans le plan XZ comprise entre -10° et +10° par rapport à la direction longitudinale X, et plus précisément comprise entre -5° et +5° par rapport à la direction longitudinale X. Le rotor 104a peut être un compresseur et/ou une turbine qui sont constitués de pales fixées sur un disque tournant autour dudit axe de rotation X'.

Classiquement le compresseur et la turbine 104a sont en amont et en aval de la chambre de combustion du moteur 104.

Du fait du mouvement de rotation du rotor 104a d'un moteur 104, un débris venant d'une pale ou d'un disque dudit rotor 104a va statistiquement se trouver dans un volume délimité par deux droites D1 et D2 qui tournent autour et qui se croisent au niveau de l'axe de rotation X' du moteur 104 et où chacun présente un angle par rapport audit axe de rotation X'. L'aéronef 100 comporte également un réservoir de dihydrogène 108 qui est disposé ici au niveau d'une partie centrale du fuselage 103, mais qui pourrait être disposé dans une autre partie de l'aéronef 100. Le dihydrogène peut être liquide ou gazeux.

Pour transporter le dihydrogène, l'aéronef 100 comporte pour chaque moteur 104, une canalisation d'apport 106 fluidiquement connectée entre le moteur 104 et le réservoir 108. La Fig. 2 montre une coupe de l'aile 102 qui présente une paroi d'intrados 202a et une paroi d'extrados 202b et entre elles, un longeron avant 102a s'étendant le long de l'aile 102 et disposé au niveau d'une partie avant de l'aile 102 juste derrière le bord d'attaque 101a. Le longeron avant 102a est généralement agencé à une distance comprise entre 10% et 25% de la distance entre le bord d'attaque 101a et le bord de fuite 101b (i.e. de la corde de l'aile 102), à partir du bord d'attaque 101a.

L'aile 102 présente également, entre la paroi d'intrados 202a et la paroi d'extrados 202b, un premier longeron arrière 102b s'étendant à l'arrière du longeron avant 102a et un deuxième longeron arrière 102c s'étendant à l'arrière du premier longeron arrière 102b. Le premier longeron arrière 102b est généralement agencé à une distance comprise entre 50% et 70% de la distance entre le bord d'attaque 101a et le bord de fuite 101b, à partir du bord d'attaque 101a. Le deuxième longeron arrière 102c est généralement agencé à une distance comprise entre 60% et 75% de la distance entre le bord d'attaque 101a et le bord de fuite 101b, à partir du bord d'attaque 101a. La distance entre le premier longeron arrière 102b et le deuxième longeron arrière 102c est comprise entre 5% et 10% de la corde de l'aile 102. Le premier longeron arrière 102b est ainsi plus proche du deuxième longeron arrière 102c que du longeron avant 102a, dans le sens bord d'attaque 101a - bord de fuite 101b de l'aile 102 (i.e. le long de la corde de l'aile 102). La distance entre le premier longeron arrière 102b et le deuxième longeron arrière 102c est au moins cinq fois inférieure à la distance entre le premier longeron arrière 102b et le longeron avant 102a. Le premier longeron arrière 102b est donc agencé de manière dissymétrique (i.e. non centrale) entre le longeron avant 102a et le deuxième longeron arrière 102c. Un caisson est donc défini entre le longeron avant 102a et le premier longeron arrière 102b, tandis qu'un couloir est défini entre les premier et deuxième longerons arrière 102b-c.

Chaque longeron 102a-c s'étend globalement le long de la direction transversale Y. Autrement dit, chaque longeron 102a-c s'étend globalement sur toute la longueur de l'aile 102 entre l'emplanture de l'aile 102 au niveau du fuselage 103 et l'extrémité de l'aile 102 la plus éloignée du fuselage 103 (correspondant au saumon de l'aile 102).

Les deux longerons arrière 102b-c sont globalement parallèles et définissent entre eux, un couloir 110 qui courre donc dans l'aile 102 entre les deux longerons arrière 102b-c et entre la paroi d'intrados 202a et la paroi d'extrados 202b. Le volume défini entre le longeron avant 102a et le premier longeron arrière 102b correspond à un caisson de voilure, qui représente un volume beaucoup plus important (par exemple cinq fois plus) que le volume du couloir 110 défini entre les deux longerons arrière 102b-c. Le couloir 110 est donc distinct d'un caisson de voilure.

Chaque longeron 102a-c s'étend verticalement entre la paroi d'intrados 202a et la paroi d'extrados 202b.

Comme représenté sur la Fig. 1, les longerons arrière 102b-c sont agencés en dehors du volume correspondant au champ des débris venant d'une pale ou d'un disque dudit rotor 104a. Ces longerons arrière 102b-c sont donc avantageusement protégés, de par leur localisation, de ces éventuels débris. Autrement dit, ces longerons arrière 102b-c sont positionnés de telle sorte qu'un débris émanant du moteur 104 ne puisse les atteindre. Chaque canalisation d'apport 106 s'étend vers l'arrière depuis le moteur 104 associé, c'est-à-dire ici globalement depuis le bord d'attaque 101a, de manière à rejoindre l'intérieur du couloir 110 de l'aile 102 supportant ledit moteur 104. Ainsi, la canalisation d'apport 106 rejoint le couloir 110 au plus près pour limiter la portion de la canalisation d'apport 106 qui pourrait être interceptée par un débris.

La canalisation d'apport 106 court alors à l'intérieur du couloir 110 où elle est protégée pour rejoindre le fuselage 103 et le réservoir 108.

Au deuxième longeron arrière 102c, sont fixés de manière articulée, les éléments mobiles 115 de l'aile 102 tels que les ailerons ainsi que les actionneurs de ces éléments mobiles. Selon l'invention, la présence du deuxième longeron 102c permet notamment la fixation des éléments mobiles 115 de l'aile 102, cette installation n'étant pas réalisable sur le premier longeron arrière 102b du fait de la présence de la canalisation d'apport 106. Contrairement à l'art antérieur où l'aile présente un seul longeron arrière auquel sont fixés les éléments mobiles de l'aile, les éléments mobiles 115 de l'aile 102 sont ici fixés au deuxième longeron 102c.

Avec un tel arrangement, chaque canalisation d'apport 106 s'étend donc très peu en dehors d'un couloir 110 et lorsqu'elle est dans un couloir 110, une canalisation d'apport 106 est protégée par les longerons arrière 102b-c qui sont des éléments structurels relativement solides pouvant dévier un éventuel débris. Plus précisément, la canalisation d'apport 106, par sa localisation entre les longerons arrière 102b-c, et notamment derrière le premier longeron arrière 102b, est en dehors du volume correspondant au champ des débris venant d'une pale ou d'un disque dudit rotor 104a, et est donc protégée de l'impact potentiel de tels débris. De plus, la canalisation d'apport 106 bénéficie d'une protection additionnelle, dans le cas où certains débris venaient à sortir du volume délimité entre les droites D1 et D2, par exemple un débris correspondant à une aube de turbine, en étant derrière le premier longeron arrière 102b. Pour assurer une bonne aération d'un couloir 110, et éviter une éventuelle accumulation de dihydrogène dans ledit couloir 110, chaque aile 102 présente au niveau de la peau d'intrados 202a, au moins une fenêtre basse 112a qui ouvre le couloir 110 à travers ladite peau d'intrados 202a afin de communiquer avec l'extérieur de l'aéronef 100, et au niveau de la peau d'extrados 202b, au moins une fenêtre haute 112b qui ouvre le couloir 110 à travers ladite peau d'extrados 202b afin de communiquer avec l'extérieur de l'aéronef 100. Les fenêtres haute 112b et basse 112a sont par exemple des prises d'air NACA.

Ainsi, un courant d'air se crée entre ladite au moins une fenêtre haute 112b et ladite au moins une fenêtre basse 112a, ce qui permet d'évacuer le dihydrogène en cas de fuite de la canalisation d'apport 106 dans le couloir 110. Plus précisément, en vol de l'aéronef 100, la différence de pression créée par l'aile 102 va forcer le passage de l'air extérieur dans le couloir 110 en entrant par la fenêtre basse 112a et en sortant par la fenêtre haute 112b.

Une telle répartition permet en vol d'assurer la circulation de l'air dans le couloir 110 du fait de la différence de pression entre l'intrados et l'extrados de l'aile 102.

Pour assurer la même circulation d'air au sol, au moins un ventilateur 116 est installé dans chaque couloir 110.

Classiquement, chaque aile 102 présente une extrémité proximale fixée au fuselage 103 et à l'opposée, une extrémité distale.

Dans le mode de réalisation de l'invention présenté à la Fig. 1, il y a une fenêtre haute 112b qui est du côté de l'extrémité proximale de l'aile 102 et une fenêtre basse 112a qui est du côté de l'extrémité distale de l'aile 102. Selon la configuration de l'aéronef 100, la fenêtre haute 112b pourrait être du côté de l'extrémité distale de l'aile et la fenêtre basse 112a pourrait être du côté de l'extrémité proximale de l'aile. En effet, en fonction du dièdre de l'aile 102, l'extrémité proximale, respectivement distale, de l'aile 102 est positionnée plus haut (selon la direction verticale Z) que l'extrémité distale, respectivement proximale, de l'aile 102. Par exemple, lorsque le dièdre de l'aile 102 est négatif (i.e. l'extrémité distale moins élevée selon la direction verticale Z que l'extrémité proximale), la fenêtre haute 112b est agencée au niveau de l'extrémité proximale, tandis que la fenêtre basse 112a est agencée au niveau de l'extrémité distale. Lorsque le dièdre de l'aile 102 est positif (i.e. l'extrémité proximale moins élevée selon la direction verticale Z que l'extrémité distale), la fenêtre basse 112a est agencée au niveau de l'extrémité proximale, tandis que la fenêtre haute 112b est agencée au niveau de l'extrémité distale.

Les fenêtres haute 112b et basse 112a peuvent être agencées à une même localisation de l'aile 102, par exemple à une même distance du plan YZ qui correspond au plan de symétrie de l'aéronef 100. De préférence, les fenêtres haute 112b et basse 112a sont agencées à des localisations différentes de l'aile 102, notamment à des distances différentes du plan YZ.

La fenêtre basse 112a peut être agencée au point le plus bas (selon la direction verticale Z) de l'aile (en vol), tandis que la fenêtre haute 112b peut être agencée au point le plus haut de l'aile 102. Les fenêtres haute 112b et basse 112a sont agencées de manière à maximiser la différence de pression entre l'air entrant et sortant du couloir 110.

Dans la mesure où le deuxième longeron arrière 102c porte les éléments mobiles 115 de l'aile 102 et les actionneurs associés à ces éléments mobiles, il est souhaitable d'éviter qu'une fuite de dihydrogène entraîne le gel de ces éléments du fait de la température cryogénique du dihydrogène. Pour cela, une paroi de protection 204 constituée d'un matériau thermiquement isolant est disposée entre la canalisation d'apport 106 et le deuxième longeron arrière 102c. Un tel matériau thermiquement isolant est par exemple, de façon non limitative, une mousse à cellule fermée, ou une laine de verre, ou une laine de roche, ou en produit à base de liège ou de micro-billes en verre. Le matériau thermiquement isolant peut être une mousse de polyimide, ou un tissu de silice pressé et durci à 65°C, ou une mousse à noyau en polystyrène expansé avec un revêtement en plastique métallisé, ou en fibre céramique à base d'alumine (Al2O3), de silice (SiO2) et de trioxyde de bore (B2O3).

## Revendications

1. Aéronef (100) comportant :
- au moins une aile (102),
- un réservoir (108) de dihydrogène,
- pour chaque aile (102), au moins un moteur (104) fonctionnant au dihydrogène, fixé à l'aile (102) et comportant un rotor (104a), et
- pour chaque moteur (104), une canalisation d'apport (106) fluidiquement connectée entre le moteur (104) et le réservoir (108) de dihydrogène,
où chaque aile (102) présente un longeron avant (102a) s'étendant au niveau d'une partie avant de l'aile (102) et un premier longeron arrière (102b) s'étendant à l'arrière du longeron avant (102a) et un deuxième longeron arrière (102c) s'étendant à l'arrière du premier longeron arrière (102b), où les deux longerons arrière (102b-c) définissent entre eux, un couloir (110), et
où chaque canalisation d'apport (106) s'étend vers l'arrière depuis le moteur (104) associé puis à l'intérieur du couloir (110) de l'aile (102) supportant le moteur (104) associé.

2. Aéronef (100) selon la revendication 1, **caractérisé en ce que** chaque aile (102) présente au niveau d'une peau d'intrados (202a), au moins une fenêtre basse (112a) qui ouvre le couloir (110) à travers ladite peau d'intrados (202a), et au niveau d'une peau d'extrados (202b), au moins une fenêtre haute (112b) qui ouvre le couloir (110) à travers ladite peau d'extrados (202b).

3. Aéronef (100) selon la revendication 2, **caractérisé en ce que** la fenêtre haute (112b) est du côté d'une extrémité proximale de l'aile (102) et **en ce que** la fenêtre basse (112a) est du côté d'une extrémité distale de l'aile (102).

4. Aéronef (100) selon la revendication 2, **caractérisé en ce que** la fenêtre haute (112b) est du côté d'une extrémité distale de l'aile (102) et **en ce que** la fenêtre basse (112a) est du côté d'une extrémité proximale de l'aile (102).

5. Aéronef (100) selon l'une des revendications 2 à 4, **caractérisé en ce que** l'aéronef comporte pour chaque couloir (110), un ventilateur (116) arrangé dans ledit couloir (110).

6. Aéronef (100) selon l'une des revendications précédentes, **caractérisé en ce que** l'aéronef comporte entre la canalisation d'apport (106) et le deuxième longeron arrière (102c), une paroi de protection (204) constituée d'un matériau thermiquement isolant.

7. Aéronef (100) selon l'une des revendications précédentes, **caractérisé en ce que** chacun des longerons avant (102a) et des premier et deuxième longerons arrière (102b-c) s'étend globalement sur toute la longueur de l'aile (102).

8. Aéronef (100) selon l'une des revendications précédentes, **caractérisé en ce que** la distance entre le premier longeron arrière (102b) et le deuxième longeron arrière (102c), entre un bord d'attaque (101a) et un bord de fuite (101b) de l'aile (102), est inférieure à la distance entre le premier longeron arrière (102b) et le longeron avant (102a).
